# EUROPÄISCHE PATENTSCHRIFT

(11) **EP 1 630 029 B1**
(45) Veröffentlichungstag und Bekanntmachung des Hinweises auf die Patenterteilung: **05.10.2011**
(21) Anmeldenummer: 05103682.0
(22) Anmeldetag: 03.05.2005
(51) Int. Cl.: B60K 23/08, G01L 5/00

(54) **Vorrichtung zur Messung des Drehmoments am Abtrieb eines Verteilergetriebes eines Kraftfahrzeuges**
Apparatus to determine the output torque of a transfer case of a vehicle
Appareil pour mesurer le couple de la sortie d'une boîte de transfert d'un véhicule automobile

(30) Priorität: 26.08.2004 AT 6292004 U
(43) Veröffentlichungstag der Anmeldung: 01.03.2006
(73) Patentinhaber: MELECS EWS GmbH & Co KG, 7011 Siegendorf (AT)
(72) Erfinder: Hellinger, Leopold, 3710, Ziersdorf (AT); Neumann, Gerhard, 3231, St. Margarethen (AT)
(74) Vertreter: Maier, Daniel Oliver

(56) Entgegenhaltungen:
- DE-A1- 3 009 454
- DE-A1- 3 603 187
- DE-A1- 19 548 928
- DE-C1- 4 313 862
- US-A- 5 992 243
- US-B1- 6 490 935

## Beschreibung

### Technisches Gebiet

Die Erfindung betrifft eine Vorrichtung zur Messung des Drehmoments am Abtrieb eines Verteilergetriebes eines Kraftfahrzeugs, wobei eine Eingangswelle und eine Ausgangswelle jeweils endseitig durch Stützlager im Verteilergetriebegehäuse gelagert sind, wobei ein Umschlingungstrieb über die Eingangswelle und die Ausgangswelle geführt ist, so dass der Weg des Kraftflusses zur Abstützung der bei Betrieb auftretenden Zugkraft des Umschlingungstriebes über diese Stützlager und über kraftleitende Bereiche des Verteilergetriebegehäuses geführt ist.

### Stand der Technik

Ein Verteilergetriebe eines Kraftfahrzeuges hat die Aufgabe, die vom Motor erzeugte Gesamtantriebsleistung in zwei Teilantriebsleistungen zwischen der Vorderachse und der Hinterachse des Allradfahrzeuges aufzuteilen. Diese Aufteilung der Gesamtantriebsleistung entspricht einer variablen Momentverteilung, welche an die jeweils vorliegenden Fahrverhältnisse und an den Leistungswunsch des Fahrzeuglenkers angepasst werden muss. Zur Modulation der Momentverteilung besitzt das Verteilergetriebe eine Stellvorrichtung, die meist von einem elektromechanischen Stellantrieb betätigt wird. Der elektromechanische Stellantrieb besteht zumeist aus einem Gleichstromstellmotor, der in einer geschlossenen Regelschleife liegt. Für die elektronische Steuerung in der Regelschleife stellt das am Abtrieb des Verteilergetriebes tatsächlich abgegebene Drehmoment eine Eingangsgröße dar, die durch eine indirekte oder direkte Messmethode ermittelt werden kann.

Eine indirekte Messmethode ist beispielsweise die Messung des Ankerstroms des Gleichstromstellmotors, aus dem dann das gesuchte Drehmoment am Abtrieb des Verteilergetriebes ermittelt wird. Hierbei taucht aber das Problem auf, dass auf Grund der sehr kurzen Stellbewegungen der Ankerstrom des Gleichstromstellmotors in erster Linie das zur Drehbeschleunigung erforderliche mechanische Moment widerspiegelt und nicht die erforderliche Stellkraft. Außerdem wird das Messergebnis durch Toleranzen der Stellmechanik und durch den Verschleiß des gesamten Verteilergetriebes verfälscht.

Eine direkte Messmethode, wie sie beispielsweise in US 4619 6 29 für die Drehmomentmessung an einer Eingangswelle und an einer Ausgangswelle eines Automatikgetriebes vorgeschlagen wird, ist aber entsprechend aufwendig und störanfällig.

Aus der US 5 992 243 ist eine Vorrichtung zur Messung des Drehmomentes am Abtrieb des Verteilergetriebes eines Karftfahrzeuges bekannt, bei der die im Betrieb auftretende Zugkraft des über die Eingangswelle und die Ausgangswelle geführten Umschlingungstriebes durch Sensormittel erfasst wird, die im Weg des Kraftflusses angeordnet sind und ein Ausgangssignal erzeugen, das einer Auswerteeinheit zugeführt ist

### Darstellung der Erfindung

Der Erfindung liegt die Aufgabe zu Grunde, den bekannten Stand der Technik weiterzuentwickeln.

Die Lösung dieser Aufgabe erfolgt durch eine Drehmomentmesseinrichtung mit den Merkmalen des Anspruchs 1. Vorteilhafte Ausgestaltungen der Erfindung sind Gegenstand von abhängigen Ansprüchen.

Gemäß einem Grundgedanken der vorliegenden Erfindung erfolgt die Messung des Drehmoments am Abtrieb eines Verteilergetriebes über eine Messung der Zugkraft. Erfindungsgemäß ist zur Erfassung dieser Zugkraft ein Sensormittel vorgesehen, das im Weg des Kraftflusses der Abstützkraft angeordnet ist. Das Sensormittel erzeugt am Ausgang ein elektrisches Signal, das einer Auswerteeinheit zugeführt wird. Die Auswerteeinheit besitzt ein geeignetes Rechenwerk, z.B einen Mikrorechner, so dass aus diesem Messsignal das abgegebene mechanische Moment errechnet werden kann. Ein wesentlicher Vorteil der Erfindung liegt darin, dass das Messsignal nicht von bewegten Teilen, wie beispielsweise von einer Drehmomentwelle abgenommen werden muss, sondern durch einen ortsfest angebrachten Kraftaufnehmer. Dies ermöglicht eine einfache und weitgehend störsichere Signalauswertung. Verglichen mit der indirekten Messmethode des Ankerstroms des Gleichstromstellmotors erreicht die Erfindung ein wesentlich genaueres Ergebnis. Der Kraftaufnehmer ist im Weg des Kraftflusses der Abstützung zwischen Ein- und Ausgangswelle angeordnet.

Eine bevorzugte Ausführungsform der Erfindung sieht vor, dass das Sensormittel durch ein als Messlager ausgebildetes Stützlager der Ausgangswelle gebildet ist. Ein derartiges Messlager ist ein Wellenlager mit Kraftaufnehmer, das konstruktiv beispielsweise gemäß DE 43 13 862 C1 oder DE 36 03 187 C2 realisiert sein kann. Derartige Lager sind kommerziell verfügbar.

Eine weitere bevorzugte Ausführungsform der Erfindung ist dadurch gekennzeichnet, dass das Sensormittel einen Dehnungsmessstreifen umfasst, der in einem Lagerhaltering des Stützlagers der Ausgangswelle angeordnet ist. Dadurch können als Stützlager handelsübliche Wälzlager verwendet werden. Eine konstruktive Ausführungsform einer derartigen Messeinheit ist beispielsweise aus DE 30 09 454 A1 bekannt.

Eine andere bevorzugte Ausgestaltung der Erfindung sieht vor, dass das Sensormittel in einer elastisch verformbaren Messzone, die im kraftleitenden Bereich des Verteilergetriebegehäuses ausgebildet ist, angeordnet ist. Die elastisch verformbare Messzone kann konstruktiv unterschiedlich ausgeführt sein. Sie kann z.B. aus einem Biegebalken, der durch eine Ausnehmung in der Gehäusewand gebildet ist und der mit Dehnungsmessstreifen versehen ist, bestehen.

Besonders bevorzugt umfasst bei obigen Ausgestaltungen der Erfindung das Sensormittel einen Kraft-Messumformer, der nach einem resistiven, kapazitiven oder piezoelektrischen Messprinzip arbeitet.

Mit Vorteil ist der Kraft-Messumformer und die Auswerteeinheit in örtlicher Nähe zur Messzone angeordnet. Aufgrund der kurzen Verbindungsleitungen und der Signalauswertung vor Ort ist das Messergebnis weniger anfällig gegenüber elektromagnetischen Störeinflüssen.

Konstruktiv vorteilhaft ist es, wenn die Auswerteeinheit auf einem plattenförmigen Schaltungsträger angeordnet ist, der in einem Gehäuseraum untergebracht und sich im Wesentlichen parallel und angrenzend an die Stirnfläche eines Stützlagers bzw. einer Ausnehmung im Verteilergetriebegehäuse erstreckt.

Zum Schutz der elektronischen Bauteile und des Kraft-Sensors ist der Gehäuseraum vorteilhaft durch einen Gehäusedeckel abgeschlossen, der eine Steckvorrichtung aufweist. Dadurch kann das Messsignal über Verbindungsleitungen zwischen Schaltungsträger und Steckvorrichtung und über einen CAN-, LIN oder ähnlichen Bus einer Verteilergetriebesteuerung oder einer Stabilitätsregelung zugeführt werden.

Für den Schaltungsträger ist je nach Temperatur und Umwelteinflüssen eine FR-4-Leiterplatte oder ein Keramiksubstrat als Werkstoff geeignet.

Um Messfehler, die durch Vibrationen hervorgerufen werden, zu minimieren, ist ein Beschleunigungsaufnehmer vorgesehen, dessen Ausgangsignal der Mikrorechner zur Korrektur bei der Ermittlung des Drehmomentes verwendet. Dies erfolgt dadurch, dass von der gemessenen Zugkraft dieses Korrektursignal entsprechend der Größe und der Richtung addiert bzw. subtrahiert wird. Insbesondere bei starken Stößen, wie sie bei einer Geländefahrt auftreten, kann durch diese vektorielle Berücksichtigung der Beschleunigung die Drehmomentmessung mit einer besseren Genauigkeit erfolgen.

Um Temperatureinflüsse zu kompensieren kann ein Temperatursensor vorgesehen sein, dessen Signal der Mikrorechner ebenfalls als Korrektursignal zur Driftkompensation verwendet.

### Kurzbeschreibung der Zeichnungen

Zur weiteren Erläuterung der Erfindung wird im nachfolgenden Teil der Beschreibung auf die Zeichnungen Bezug genommen in denen weitere vorteilhafte Ausgestaltungen, Einzelheiten und Wirkungen der Erfindung zu entnehmen sind. Es zeigen:
- Figur 1: ein Verteilergetriebe in einer geöffneten Perspektive wobei der Leistungsfluss durch Pfeile dargestellt ist;
- Figur 2: eine schematische Darstellung des Messprinzips der erfindungsgemäßen Drehmomentmesseinrichtung;
- Figur 3: eine erste Variante der Erfindung mit Sicht auf den Verteilergetriebegehäusedeckel bei der das Stützlager der Ausgangswelle als Messlager ausgebildet ist;
- Figur 4: die Ausführung der Erfindung gemäß Figur 3 mit einer Auswerteeinheit, die auf einem Schaltungsträger angeordnet ist, der das Messlager abdeckt;
- Figur 5: die Ausführung der Erfindung gemäß Figur 3, in einer Darstellung, in welcher der Aufnahmeraum für die Auswerteeinheit durch einen Gehäusedeckel dichtend verschlossen ist;
- Figur 6: eine zweite Variante der Erfindung bei der das Sensormittel durch einen Dehnungsmessstreifen in einem Lagerhaltering eines Stützlagers der Ausgangswelle angeordnet ist;
- Figur 7: eine dritte Variante der Erfindung, bei der das Sensormittel in einer Messzone in einem kraftleitenden Bereich zwischen der Eingangswelle und der Ausgangswelle des Verteilergetriebegehäuses angeordnet ist.

### Ausführung der Erfindung

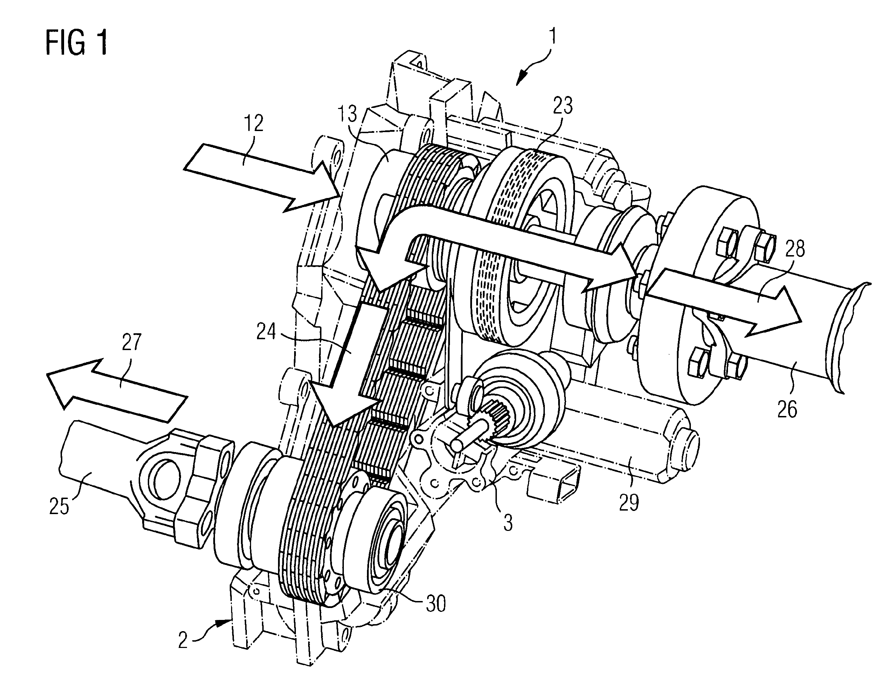

Die Figur 1 zeigt eine perspektivische Darstellung eines Verteilergetriebes 1. Die Gesamtantriebsleistung 12 einer nicht näher dargestellten Brennkraftmaschine eines Kraftfahrzeuges wird einer Eingangswelle 13 zugeführt. Die Eingangswelle 13 steht in einer Wirkverbindung mit einem Kupplungsglied 23. Das Kupplungsglied 23 wird von einem Aktuator, beispielsweise einem Gleichstromstellmotor 29 über eine Stellmechanik 3 betätigt. Auf diese Weise wird die an der Eingangswelle 13 zugefügte Gesamtantriebsleistung 12, bzw. Gesamtmoment, durch das Kupplungsglied 23 zwischen den Ausgangswellen 25 und 26 aufgeteilt. Mit dem Bezugszeichen 30 ist das abtriebsseitige Stützlager der Welle 25 im Verteilergetriebegehäuse 2 bezeichnet. Die Kraftübertragung auf die Ausgangswelle 25 erfolgt über einen Umschlingungstrieb 24. Der Leistungsfluss im Verteilergetriebe ist in Figur 1 durch die Pfeile 12, 27, 28 dargestellt. Der Pfeil 12 kennzeichnet die zugeführte Gesamtantriebsleistung, die Pfeile 27 bzw. 28 die Teilantriebsleistungen für die Vorderachse bzw. Hinterachse des Allradfahrzeuges. Die Modulation des Leistungsflusses erfolgt durch den Gleichstromstellmotor 29, der von einer nicht näher dargestellten Getriebesteuereinheit Steuersignale erhält und diese über eine Getriebestellmechanik 3 auf das Kupplungsglied 23 überträgt. Der Umschlingungstrieb 24 ist in der gezeigten Ausführung als formschlüssiger Zahnriementrieb gezeichnet. Der Umschlingungstrieb 24 kann aber auch durch ein beliebig anderes Zugmittel, wie beispielsweise durch einen Kettentrieb oder einem Riemenkörper aus Kunststoff oder ähnlichem gebildet sein.

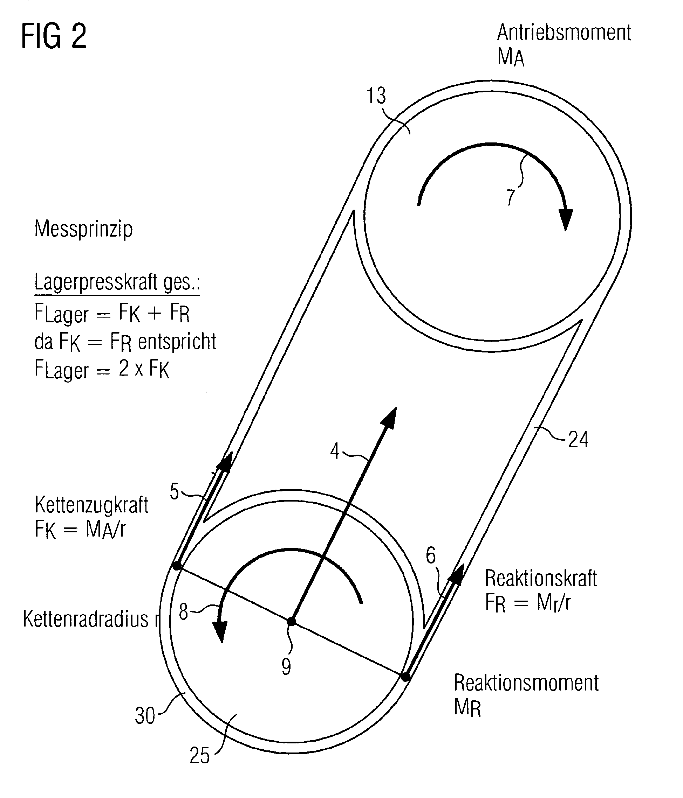

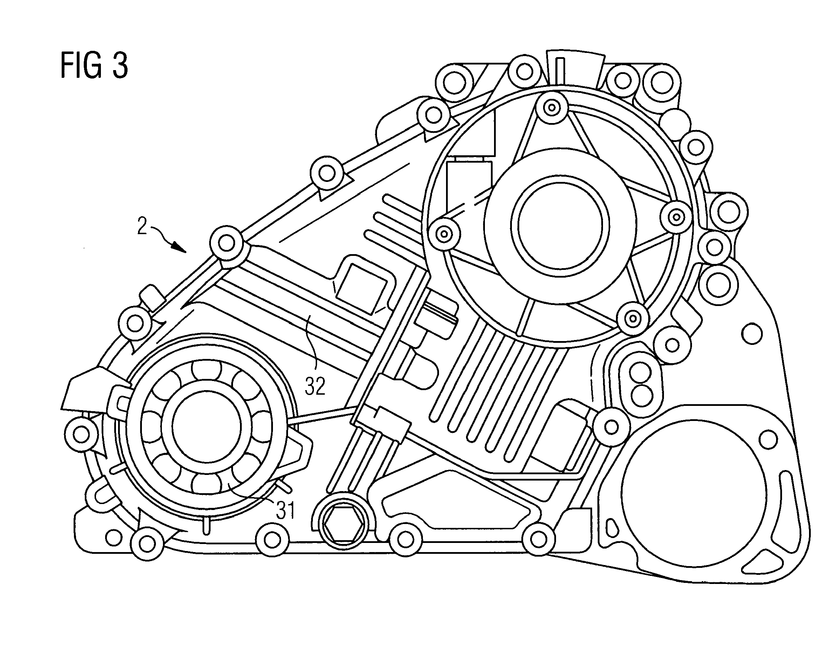

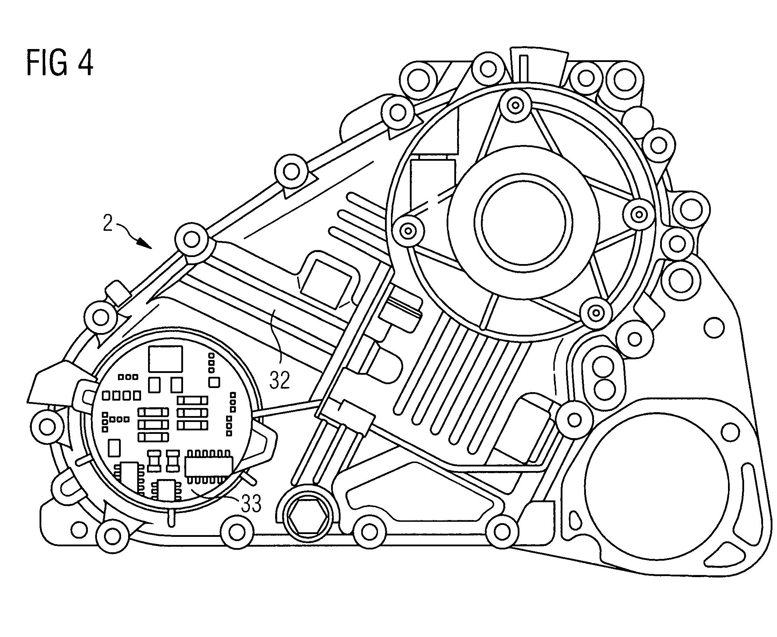

In Figur 2 ist das Messprinzip der erfindungsgemäßen Drehmomentmesseinrichtung in einer Prinzipdarstellung gezeigt. Das Antriebsmoment M_{A} (Drehrichtungspfeil 7) der Eingangswelle 13 wird über den Umschlingungstrieb 24 auf die Ausgangswelle 25 übertragen und ruft im Triebmittel 24 eine Zugkraft Fₖ (Pfeil 5) hervor, welche gleich dem Antriebsmoment M_{A} dividiert durch den Radius r (Bezugszeichen 9) der Umschlingung auf der Ausgangswelle 25 ist. Folge davon ist ein Reaktionsmoment (Drehrichtungspfeil 8) bzw. im Trieb 24 eine Reaktionskraft (Pfeil 6) Fᵣ= Mᵣ/r. Auf das Stützlager 30 der Ausgangswelle 25 wirkt die doppelte Zugkraft (Pfeil 4), Abstützkraft F_{Lager} = Fₖ + Fᵣ. Erfindungsgemäß wird das mechanische Moment an der Ausgangswelle 25 aus der auf das Stützlager 30 wirkenden Abstützkraft ermittelt. Hierzu sieht die Erfindung Sensormittel vor, die im Kraftfluss der Abstützkraft zwischen den Wellen 13 und 25 angeordnet sind. Der Kraftfluss der Abstützung führt über die Lagerung der Eingangswelle 13 und die Lagerung der Ausgangswelle 25 sowie über die tragenden Bereiche 32 (siehe Fig. 3 bis Fig. 7) des Verteilergetriebegehäuses 2 (Fig. 1). Gemäß der Erfindung ist auf diesem Weg 32 eine elastisch verformbare Messzone ausgebildet, in welcher ein Kraft-Messumformer angeordnet ist. Dieser formt die Abstützkraft in ein elektrisches Messsignal um, welches in einer Auswerteeinheit ausgewertet wird. Die Auswerteeinheit beinhaltet verschiedene Bauteile bevorzugt der Digitaltechnik darunter einen Mikroprozessor 10 (Fig. 4), der die für die Auswertung entsprechende Rechenoperationen durchführt. Bei der Berechnung des mechanischen Moments berücksichtigt er auch weitere Messsignale, die er vom einem Temperatursensor und einem Beschleunigungssensor erhält, so dass durch Temperatur oder Erschütterung verursachte Störeinflüsse durch die Berechnung kompensiert werden können.
Die Sensormittel können im Weg des Kraftflusses an verschiedenen Orten lokalisiert sein. Drei bevorzugte Messorte werden im folgenden näher erläutert.

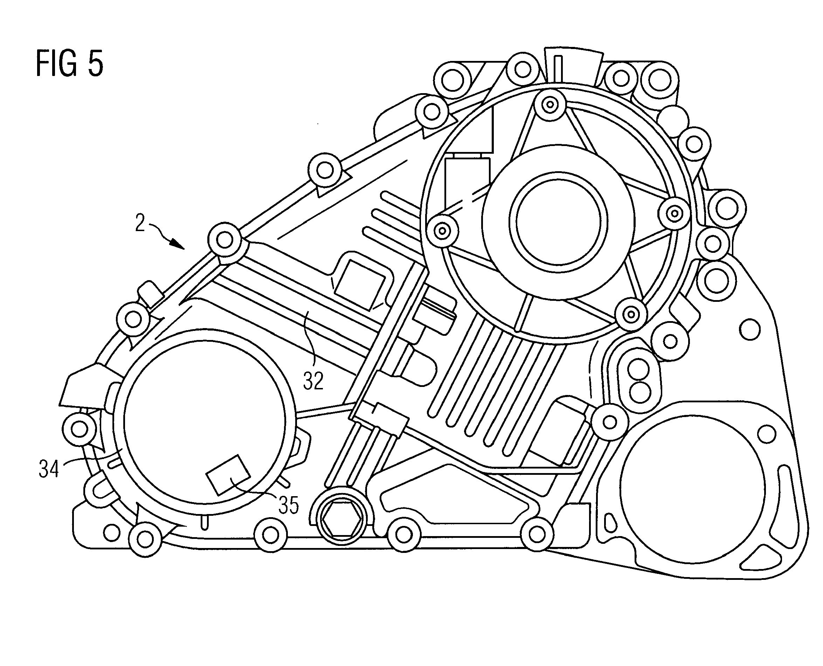

Die Figur 3 zeigt eine erste Variante der Erfindung. Das Stützlager 30 (Fig. 1) der Ausgangswelle 25 ist hier als Messlager 31 ausgebildet. Das Messlager 31 erfasst die Abstützkraft, im kraftleitenden Bereich 32 zwischen den Wellen 13 und 25 (Fig. 1) die im Gehäuse 2 abgestützt sind. Außenseitig ist der Einbauraum dieses Messlagers 31 vom plattenförmigen Schaltungsträger der Auswerteeinheit 33 abgedeckt (Figur 4). Ein Gehäusedeckel 34 schließt den Einbauraum dichtend ab. Der Gehäusedeckel 34 weist eine Steckvorrichtungen 35 auf (Fig. 5), mittels derer eine signalleitende Verbindung zu einer nicht näher dargestellten Verteilergetriebesteuerung oder zu einer ebenfalls nicht gezeichnete Stabilitätsregelung hergestellt werden kann.

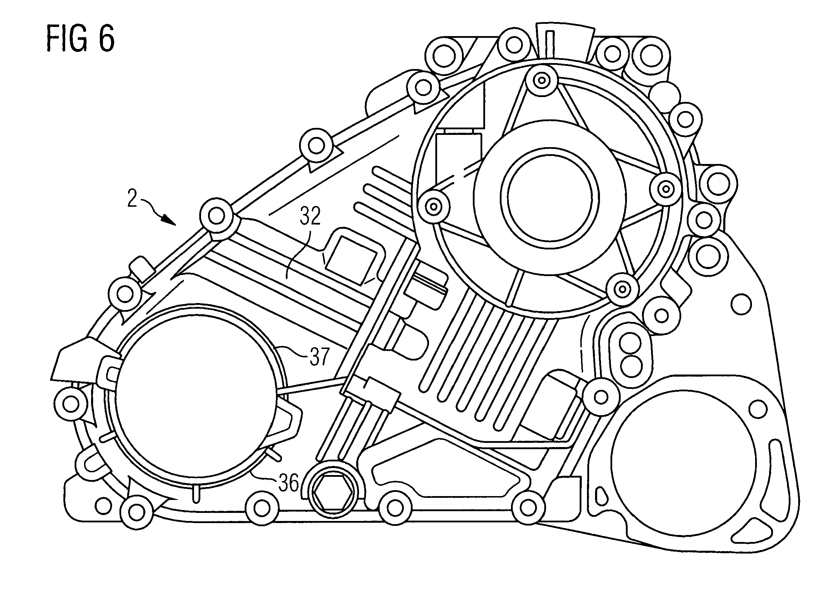

In Figur 6 ist eine zweite Variante der Erfindung dargestellt. Das Stützlager der Ausgangswelle 25 (Fig. 1) wird von einem Lagerhaltering 36 gehalten, der im Weg des Kraftflusses 32 des Verteilergetriebes 2 einen Dehnungsmessstreifen 37 trägt, durch welchen die vom Zugmittel 24 (Fig. 1) hervorgerufene Abstützkraft gemessen wird. Aus der Messung dieser Abstützkraft wird wie oben erläutert, das an der Ausgangswelle 25 abgegebene mechanische Moment ermittelt. Auch hier wird die Auswerteeinheit durch elektronische Bauteile gebildet, die auf einem plattenförmigen Träger parallel zum Lagerhaltering im Gehäuseraum untergebracht sind. Der Gehäuseraum ist auch hier mit einem Gehäusedeckel, der nach außen eine Steckvorrichtung aufweist, verschlossen.

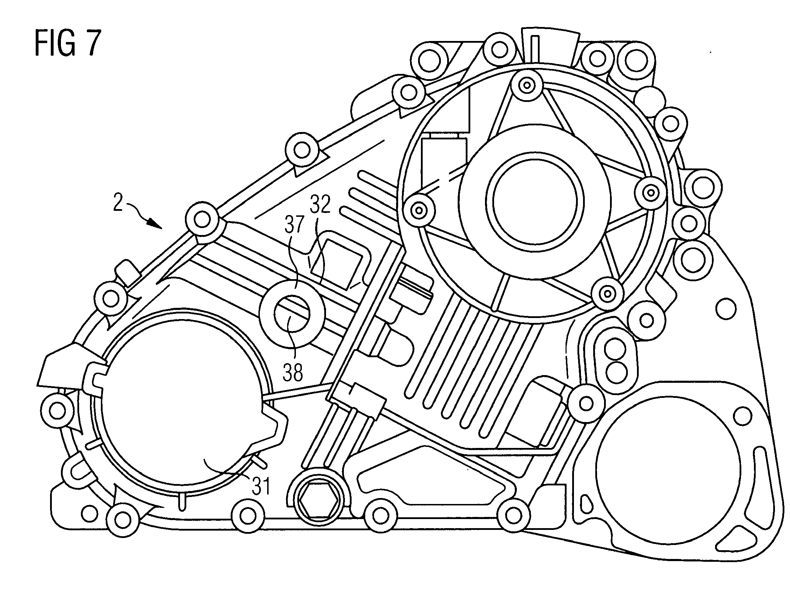

Eine dritte Variante der Erfindung ist in Figur 7 dargestellt. Zur Erfassung der Abstützkraft ist im kraftleitenden Bereich 32 zwischen der Eingangswelle 13 und der Ausgangswelle 25 (Fig. 1) des Verteilergetriebegehäuses 2 mit einer elastisch verformbaren Messzone 38 versehen, in welcher sich ein Kraftsensor, beispielsweise eine geeignet angebrachte Anordnung von Dehnungsmessstreifen 37, befindet. Die Auswertung dieses Messsignals sowie die Weiterleitung entspricht dem oben Dargestellten.

### Zusammenstellung der verwendeten Bezugszeichen

- 1: Verteilergetriebe
- 2: Verteilergetriebegehäuses
- 3: Stellmechanik zur Betätigung der Kupplung
- 4: Abstützkraft
- 5: Zugkraft
- 6: Reaktionskraft
- 7: Pfeil
- 8: Pfeil
- 9: Radius
- 10: Mikroprozessor, elektronische Bauteile
- 12: Gesamtantriebsleistung
- 13: Eingangswelle
- 23: Kupplungsglied
- 24: Umschlingungstrieb
- 25: Ausgangswelle, zur Vorderachse
- 26: Ausgangswelle, zu Hinterachse
- 27: Teilantriebsleistung zur Vorderachse
- 28: Teilantriebsleistung zur Hinterachse
- 29: Gleichstromstellmotor
- 30: Stützlager abtriebseitig
- 31: Messlager
- 32: Weg des Kraftflusses, Kraftleitender Bereich von 2
- 33: Auswerteeinheit, elektronische Schaltung
- 34: Gehäusedeckel
- 35: Steckvorrichtung
- 36: Lagerhaltering
- 37: Dehnungsmessstreifen
- 38: elastisch verformbare Messzone

## Patentansprüche

1. Vorrichtung zur Messung des Drehmomentes am Abtrieb eines Verteilergetriebes eines Kraftfahrzeuges, wobei eine Eingangswelle (13) und eine Ausgangswelle (25) jeweils endseitig durch Stützlager (30) im Verteilergetriebegehäuse (2) gelagert sind, wobei ein Umschlingungstrieb (24) über die Eingangswelle (13) und die Ausgangswelle (25) geführt ist, so dass der Weg des Kraftflusses zur Abstützung der bei Betrieb auftretenden Zugkraft des Umschlingungstriebes über diese Stützlager und über kraftleitende Bereiche (32) des Verteilergetriebegehäuses geführt ist, wobei die Zugkraft durch Sensormittel (31, 36, 37, 38) erfasst wird, die im Weg des Kraftflusses angeordnet sind und ein Ausgangssignal erzeugen, das einer Auswerteeinheit (33) zugeführt ist, **dadurch gekennzeichnet, dass** ein Beschleunigungsaufnehmer vorgesehen ist, dessen Ausgangssignal vom Mikrorechner als Korrektursignal für Messfehler, die durch Vibrationen hervorgerufen werden, von der gemessenen Zugkraft entsprechend der Größe und der Richtung addiert bzw. subtrahiert werden.

2. Vorrichtung nach Anspruch 1, **dadurch gekennzeichnet, dass** das Sensormittel durch ein als Messlager (31) ausgebildetes Stützlager der Ausgangswelle gebildet ist.

3. Vorrichtung nach Anspruch 1, **dadurch gekennzeichnet, dass** das Sensormittel einen Dehnungsmessstreifen (37) umfasst, der in einem Lagerhaltering (36) des Stützlagers der Ausgangswelle angeordnet ist.

4. Vorrichtung nach Anspruch 1, **dadurch gekennzeichnet, dass** das Sensormittel in einer elastisch verformbaren Messzone (38), die durch eine Ausnehmung im kraftleitenden Bereich des Verteilergetriebegehäuses ausgebildet ist, angeordnet ist.

5. Vorrichtung nach einem der Ansprüche 2, 3 oder 4, **dadurch gekennzeichnet, dass** das Sensormittel einen resistiven, kapazitiven oder piezoelektrischen Kraft-Messumformer umfasst.

6. Vorrichtung nach Anspruch 5, **dadurch gekennzeichnet dass** der Kraft-Messumformer mit einer elektronischen Schaltung auf einem plattenförmigen Schaltungsträger verbunden ist.

7. Vorrichtung nach Anspruch 6, **dadurch gekennzeichnet, dass** der Schaltungsträger in einem Gehäuseraum untergebracht ist und sich im Wesentlichen parallel und angrenzend an die Stirnfläche eines Stützlagers bzw. der Ausnehmung erstreckt.

8. Vorrichtung nach Anspruch 7, **dadurch gekennzeichnet, dass** der Gehäuseraum durch einen Gehäusedeckel (34) abgeschlossen ist, der eine Steckvorrichtung 35) aufweist welche über Verbindungsleitungen mit dem Schaltungsträger verbunden ist.

9. Vorrichtung nach einem der Ansprüche 6 bis 8, **dadurch gekennzeichnet, dass** für den Schaltungsträger eine FR 4-Leiterplatte oder ein Keramiksubstrat verwendet wird.

## Claims

1. Apparatus for measuring the output torque of a transfer case of a motor vehicle, the ends of an input shaft (13) and an output shaft (25) in each instance being supported by support bearings (30) in the transfer case housing (2), with a wraparound drive unit (24) being passed by way of the input shaft (13) and the output shaft (25) so that the path of the force flow to support the tensile force of the wraparound drive unit produced during operation is passed by way of these support bearings and by way of force-conducting regions (32) of the transfer case housing, the tensile force being detected by sensor means (31, 36, 37, 38), which are disposed in the path of the force flow and generate an output signal, which is fed to an evaluation unit (33), **characterised in that** an acceleration pick-up is provided, the output signal of which is added or subtracted from the measured tensile force according to size and direction by the microprocessor as a correction signal for measurement errors produced by vibrations.

2. Apparatus according to claim 1, **characterised in that** the sensor means is formed by a support bearing of the output shaft configured as a measuring bearing (31).

3. Apparatus according to claim 1, **characterised in that** the sensor means comprises a strain gauge (37), which is disposed in a bearing holder (36) of the support bearing of the output shaft.

4. Apparatus according to claim 1, **characterised in that** the sensor means is disposed in an elastically deformable measurement zone (38), which is formed by a cutout in the force-conducting region of the transfer case housing.

5. Apparatus according to one of claims 2, 3 or 4, **characterised in that** the sensor means comprises a resistive, capacitive or piezoelectric force measuring transducer.

6. Apparatus according to claim 5, **characterised in that** the force measuring transducer is connected to an electronic circuit on a board-type circuit support.

7. Apparatus according to claim 6, **characterised in that** the circuit support is accommodated in a housing space and extends essentially parallel and adjacent to the end face of a support bearing or the cutout.

8. Apparatus according to claim 7, **characterised in that** the housing space is closed off by a housing cover (34), which features a coupling apparatus (35), which is connected by way of connecting lines to the circuit support.

9. Apparatus according to one of claims 6 to 8, **characterised in that** an FR4 printed circuit board or a ceramic substrate is used for the circuit support.

## Revendications

1. Dispositif de mesure du couple à la sortie d'une boîte de transfert d'un véhicule automobile, un arbre d'entrée (13) et un arbre de sortie (25) étant montés, chacun du côté d'une extrémité, dans le carter de boîte de transfert (2) au moyen de paliers de support (30), un mécanisme d'entraînement à courroie (24) passant sur l'arbre d'entrée (13) et l'arbre de sortie (25), de manière à ce que le trajet du flux de force servant à l'appui de la force de traction du mécanisme d'entraînement à courroie qui se produit en marche passe par ces paliers de support et par des zones de transfert de force (32) du carter de boîte de transfert, la force de traction étant saisie par des moyens de détection (31, 36, 37, 38) qui sont situés dans le trajet du flux de force et produisent un signal de sortie qui est amené à une unité d'analyse (33), **caractérisé en ce que** l'on prévoit un accéléromètre dont le signal de sortie est additionné resp. soustrait à la force de traction mesurée, en fonction de sa grandeur et de sa direction, par un micro-ordinateur en tant que signal de correction pour les erreurs de mesure provoquées par les vibrations.

2. Dispositif selon la revendication 1, **caractérisé en ce que** le moyen de détection est formé par un palier de support de l'arbre de sortie exécuté en tant que palier de mesure (31).

3. Dispositif selon la revendication 1, **caractérisé en ce que** le moyen de détection comprend une jauge de contrainte (37) qui est située dans une bague de maintien de palier (36) du palier de support de l'arbre de sortie.

4. Dispositif selon la revendication 1, **caractérisé en ce que** le moyen de détection est situé dans une zone de mesure (38) pouvant subir une déformation élastique qui est formée par un évidement dans la zone de transfert de force du carter de boîte de transfert.

5. Dispositif selon l'une des revendications 2, 3 ou 4, **caractérisé en ce que** le moyen de détection comprend un transducteur de force résistif, capacitif ou piézo-électrique.

6. Dispositif selon la revendication 5, **caractérisé en ce que** le transducteur de force est relié à un circuit électronique sur un porte-circuit en forme de plaque.

7. Dispositif selon la revendication 6, **caractérisé en ce que** le porte-circuit est logé dans un volume du carter et s'étend essentiellement de manière parallèle et contiguë à la surface frontale d'un palier de support resp. de l'évidement.

8. Dispositif selon la revendication 7, **caractérisé en ce que** le volume de carter est fermé par un couvercle de carter (34) qui est pourvu d'un dispositif de connexion (35) qui est relié au porte-circuit par le biais de lignes de liaison.

9. Dispositif selon l'une des revendications 6 à 8, **caractérisé en ce que** l'on utilise, pour le porte-circuit, une carte de circuit imprimé du type FR-4 ou un substrat en céramique.
